Europäisches Patentamt

(19) European Patent Office

Office européen des brevets

(11) Publication number: **0 037 386**
**B1**

(12) **EUROPEAN PATENT SPECIFICATION**

(45) Date of publication of patent specification: **23.01.85**

(21) Application number: **81850056.3**

(22) Date of filing: **26.03.81**

(51) Int. Cl.⁴: **A 47 L 9/04, B 23 Q 11/00**

(54) Nozzle for industrial vacuum cleaners.

(30) Priority: **27.03.80 SE 8002391**

(43) Date of publication of application:
**07.10.81 Bulletin 81/40**

(45) Publication of the grant of the patent:
**23.01.85 Bulletin 85/04**

(84) Designated Contracting States:
**AT BE CH DE FR GB IT LI NL**

(56) References cited:
**DE-A-1 628 579**
**DE-C- 309 877**
**US-A-3 166 778**
**US-A-3 766 586**

(73) Proprietor: **Aktiebolaget Bygg- och Transportekonomi (BT)**
**S-161 84 Bromma (SE)**

(72) Inventor: **Anderberg, Hans**
**Bagartorpsringen 62**
**S-171 65 Solna (SE)**

(74) Representative: **Erixon, Bo**
**Box 15200**
**S-104 65 Stockholm (SE)**

Courier Press, Leamington Spa, England.

## Description

This invention refers to nozzles for industrial vacuum cleaners and relates more closely to a nozzle of a type which is fitted with movable cutter elements. These elements serve to disintegrate material sucked in through the mouth of the nozzle and prevent the nozzle and hoses or the like from becoming clogged.

Industrial vacuum cleaners are used in workshops and similar working premises for the purpose of removing dust and waste arising in the course of machining and processing from machines and the surrounding areas. The need for devices which effectively clean workshop premises is associated with the environmental problems caused by the waste that arises. Waste strewn around machine tools and conveyors increases the risk of personnel slipping, gives rise to clogging of machines and on the whole creates an unpleasant working environment. Waste gives rise to a specific problem in the woodworking industry. Sawmills are extremely difficult to keep clean on account of the equipment such as conveyors, mechanical saws etc. installed on the premises. In connection with working in a sawmill trimming shop the risk is therefore high that personnel will suffer from "trimming shop sickness" largely due to inefficient cleaning of the premises.

This sickness is a form of allergy with the same symptoms as severe influenza. It is caused by fungi which grow on damp wood in poorly-ventilated environments. Handling the timber causes the spores from the fungi to swirl around in the air and they are subsequently inhaled into the lungs.

Repeated attacks of trimming shop sickness may result in lengthy or permanent injury in the form of reduced lung capacity. The only thing that helps in the long run is to change the environment or for the person concerned to change his employment. The development of devices which effectively remove these environmental problems is obviously a desirable goal.

The use of industrial vacuum cleaners for cleaning working premises is known. These consist either of central suction installations with outlets for the connection of suction hoses at suitable points in the premises or else of mobile equipment which is moved around the premises on wheels. In order to clean more effectively, these devices have exceptionally high suction power. However, when used in industrial premises where the waste consists of left-over end-pieces, agglomerations of powder or other materials which have a tendency to clog the nozzles, such devices have not proved to be effective enough to clean the working premises satisfactorily.

In US patent No. 3,166,778 is presented a vacuum cleaner head, which includes a rotatable agitator equipped with a row of teeth. These are primarily intended for setting up the pile of rugs. The agitator rotates in just one direction, and that is moving the teeth against the suction stream generated by the vacuum cleaner.

In sawmill premises the waste consists largely of splinters, chips and small pieces of wood which readily jam in nozzles and hoses, choking them and rendering them unserviceable. Such obstructions must be removed from the nozzle or hose manually before cleaning can be resumed. As a result, cleaning work is time-consuming and often found to be so difficult that it is frequently neglected for this reason.

With the present invention a solution to the problem of clogged nozzles and hoses in industrial vacuum cleaners is proposed by providing the nozzle with an element which disintegrates the material sucked into it. More detailed characteristics of the invention will be evident from the following patent claims.

For additional clarification of the invention, an embodiment of it will be described in the following with reference to the figures on the appended drawings.

Fig. 1 shows a perspective view of a nozzle.

Fig. 2 shows a side view of the nozzle in Fig. 1.

Fig. 3 shows a nozzle as in Fig. 2 with the front part of the casing in the open position.

Fig. 4 shows a nozzle viewed from the front in the intake direction.

A vacuum cleaner nozzle 1 is connected to a suction tube 2 on which an adjustable carrying handle 3 and a fixed handle 4 are mounted. The unit thus formed is designed to be connected via a suction hose to central vacuum cleaning outlets or to a portable vacuum cleaner.

Nozzle 1 consists of a casing of metal or other material at the intake mouth of which is mounted a part 5 which pivots on a hinge 6. By tilting part 5 the suction opening of the nozzle can be varied. Tilting of part 5 is achieved by means of an operating cylinder 7, one end of which is fixed to nozzle 1 and the piston of which is fixed to the pivoted part 5.

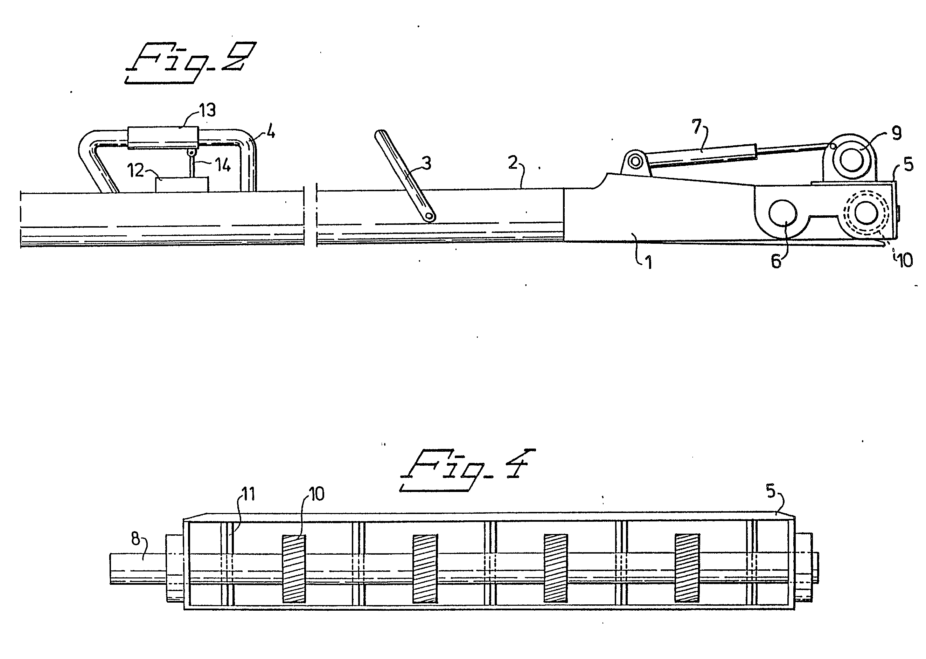

Between the two side sections of pivoted part 5 is a rotatable shaft 8 (see Fig. 4) arranged transversely to the intake direction A. The rotatable shaft is driven via a transmission 9a by a reversible motor 9 arranged on pivoted part 5, which in the presented version consists of an air motor but electric motors, for example, can also be used. Arranged on shaft 8 and rotating with it are a number of disintegrating elements 10 positioned at a distance from each other, these devices preferably consisting of milling cutters.

Nozzle 1 also contains a number of fixed knives 11 arranged behind the milling cutters 10, i.e. upstream thereof. The fixed knives 11 are positioned at a distance from each other in nozzle 1 so that each knife 11 occupies the space between two milling cutters 10. The edges of the knives 11 are at right angles to the rotatable shaft 8.

To control the tilting movement of part 5 and the direction of rotation of the milling cutters 10, a three-way valve 12 is arranged under the carrying handle 4 on suction tube 2. Valve 12 is connected via hoses to the operating cylinder 7, the reversible motor 9 and a compressed air source. To actuate valve 12 a spring-loaded sleeve 13 is arranged so as to slide on handle 4. By means of a control link 14 the sliding movement of sleeve 13 on handle 4 is transmitted to valve 12.

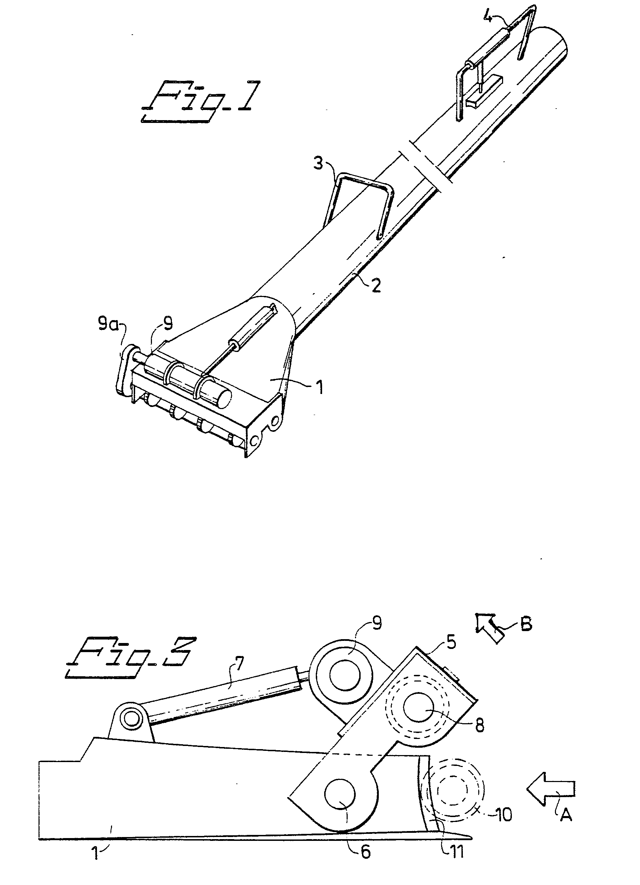

When using the nozzle unit, suction tube 2 is connected to a suction hose. The operator grasps the adjustable handle 3 with one hand and the fixed handle 4 with the other hand. To regulate the tilt angle of part 5 and the direction of rotation of motor 9, the sleeve 13 is slid along handle 4. When the pivoted part 5 assumes the position shown in Fig. 2 the milling cutters 10 rotate in such a manner that the vacuumed material is carried towards the rear knives 11, i.e. clockwise as shown in the Figure. When the vacuumed material consists of chips, splinters and small pieces of wood which tend to clog the nozzle it is disintegrated by the milling cutters 10 working against the knives 11.

The position of the pivoted part 5 shown in Fig. 3 is a rest position in which the milling cutters 10 do not rotate. Sleeve 13 is spring-loaded on the handle in such a manner that it normally assumes this position. In this way, inadvertent starting of the milling cutters is avoided.

In an additional position (not shown), part 5 has been tilted still further upward in the direction of arrow B (Fig. 3). In this position the milling cutters are caused to rotate in the opposite direction to that described in connection with Fig. 2. As a result, the material that has jammed in the nozzle is caused to be carried out of it again.

Under certain circumstances it may be suitable to fit the nozzle with wheels to facilitate its use. Two wheels can be arranged beside the intake opening on a nozzle which is 300 mm wide, and a castor can be mounted behind these wheels.

Introductorily it was mentioned that the invention can be used for cleaning in sawmill premises. However, the invention is not limited to this application only but can be used in connection with numerous spheres of activity. In conjunction with the manufacture of float glass, for example, waste occurs in the form of comparatively large pieces of glass. These must be cleared away from floors and machines to avoid injuries to personnel. By using a vacuum cleaner nozzle with disintegrating elements, such waste can also be removed by means of industrial vacuum cleaners.

In connection with the casting of gearbox housing etc in foundries, the foundry sand is flushed out of the mould and collected in containers. The waste arising consists of a comparatively tough product of foundry sand and water glass. Removal of this material by vacuuming will be facilitated to a high degree if it is disintegrated by means of a nozzle according to the invention.

The aforementioned applications of the invention comprise only some examples of its usefulness.

A nozzle according to the invention is on the whole practicable for vacuuming all materials which owing to their shape or consistency must be disintegrated before they can be sucked in through the nozzle.

**Claims**

1. A nozzle for industrial vacuum cleaners, consisting of a casing incorporating an intake opening in which fixed elements (11) are arranged at a distance from each other along an imaginary line running transversely to the intake direction (A) and in which intake opening movable elements (10) are mounted on a rotatable shaft (8), said elements (10) being arranged between the aforementioned fixed elements (11) and upstream of them, characterized by the fixed elements (11) being knives and the movable elements (10) being cutters, the knives and cutters cooperating to disintegrate waste material passing through the intake opening, by a reversible motor (9) for driving the rotatable shaft (8) and by controlling devices (12, 13, 14) for regulating the rotary motion of the movable cutters (10) in such a way that they either rotate in an initial direction which moves the material inward through the nozzle (1) or rotate in the opposite direction to the aforementioned in which the mateiral is carried out of the nozzle or are stationary during the suction.

2. A nozzle as in claim 1, characterized in that the intake opening of the casing embraces a part (5) which pivots on a hinge (6) and in which the rotatable shaft (8) is journalled, said pivoted part (5) being arranged by means of controls (7) to tilt between three positions, namely a first position (Fig. 2) in which the nozzle opening is smallest, a second position in which the nozzle opening is largest, and an intermediate position (Fig. 3).

3. A nozzle as in claim 2, characterized in that the movable cutters (10) rotate in said initial direction when the pivoted part (5) is in said first position, that they rotate in said opposite direction when the pivoted part (5) is in said second position and in that they are stationary when the pivoted part is in said intermediate position (Fig. 3).

4. A nozzle as in any of the previous claims, characterized in that the reversible motor (9) consists of an air motor.

5. A nozzle as in any of claims 2—4, characterized in that the reversible motor (9) is arranged on the pivoted part (5) of the casing (1) and is connected to the rotatable shaft (8) via a transmission.

6. A nozzle as in any of the previous claims, characterized in that the movable cutters (10) consist of milling cutters.

7. A nozzle as in any of the previous claims, characterized in that it is fitted with wheels for the purpose of moving it across a floor surface.

8. A nozzle as in claim 7, characterized by two wheels beside the mouth of the nozzle (1) and a castor situated behind these wheels.

## Revendications

1. Une embouchure pour des aspirateurs industriels de poussière, comprenant une enveloppe pourvue d'une ouverture d'entrée dans laquelle des éléments fixes (11) sont disposés à des intervalles régulier le long d'une ligne imaginaire s'étendant transversalement par rapport au sens d'aspiration (A) et dans lequel des éléments mobiles d'ouverture d'entrée (10) sont montés sur un arbre rotatif (8), ces éléments (10) étant disposés entre les éléments fixes précités (11) et en amont de ces derniers, caractérisée en ce que les éléments fixes (11) sont des couteaux et que les éléments mobiles (10) sont des hacheurs, les couteaux et les hacheurs coopérant entre eux afin de désintégrer les déchets traversant l'ouverture d'entrée, et en ce qu'il est prévu un moteur réversible (9) pour entraîner l'arbre rotatif (8) ainsi que des dispositifs de commande (12, 13, 14) pour régler le mouvement rotatif des hacheurs mobiles (10), de telle sorte qu'ils tournent soit dans un sens initial qui déplace la matière vers l'intérieur à travers l'embouchure (1), soit dans le dens contraire à ce sens initial, et dans lequel la matière est évacuée de l'embouchure, ces hacheurs mobiles pouvant également être immobilisés pendant l'aspiration.

2. Une embouchure selon la Revendication 1, caractérisée en ce que l'ouverture d'entrée de l'enveloppe entoure une partie (5) qui pivote autour d'une charnière (6) et dans laquelle l'arbre rotatif (8) est tourillonné, cette partie pivotante (5) étant soumise à des commandes (7) de manière à pouvoir basculer entre trois positions, à savoir une première position (fig. 2) dans laquelle l'ouverture de l'embouchure présente sa section minimale, une seconde position dans laquelle l'ouverture de l'embouchure est maximale, et une position intermédiaire (fig. 3).

3. Une embouchure selon la Revendication 2, caractérisée en ce que les hacheurs mobiles (10) tournent dans ledit sens initial lorsque la partie pivotante (5) se trouve dans ladite première position, qu'ils tournent dans ledit sens contraire lorsque la partie pivotante (5) se trouve dans ladite seconde position et qu'ils restent fixes lorsque la partie pivotante se trouve dans ladite position intermédiaire (fig. 3).

4. Une embouchure selon l'une quelconque des Revendications précédentes, caractérisée en ce que ledit moteur réversible est un moteur (9) pneumatique.

5. Une embouchure selon l'une quelconque des Revendications 2 à 4, caractérisée en ce que ledit moteur réversible (9) est monté sur la partie pivotante (5) de l'enveloppe (1) et qu'il est relié audit arbre rotatif (8) par l'intermédiaire d'une transmision.

6. Une embouchure selon l'une quelconque des Revendications précédentes, caractérisée en ce que lesdits hacheurs mobiles (10) se composent de fraises.

7. Une embouchure selon l'une quelconque des Revendications précédentes, caractérisée en ce qu'elle est pourvue de roulettes pour lui permettre de se déplacer sur la surface du sol.

8. Une embouchure selon la Revendication 7, caractérisée en ce qu'elle comporte deux roulettes disposées latéralement par rapport à l'embouchure ainsi qu'une roulette pivotante disposée derrière ces roulettes.

## Patentansprüche

1. Mundstück für Industrie-Reinigungssauger, das aus einem Gehäuse mit Ausaugöffnung besteht, in der orstfeste Elemente (11) mit Abstand voneinander längs einer gedachten, quer zur Ansaugrichtung (A) liegenden Linie vorgesehen und bewegliche Elemente (10) auf einer drehbaren Welle (8) zwischen den feststehenden Elementen (11) und in Saugrichtung davor befestigt sind, dadurch gekennzeichnet, dass die feststehenden Elemente (11) Messer und die beweglichen Elemente (10) Zuschneider sind, Messer und Zuschneider zur Auflösung von diè Ansaugöffnung passierenden Abfallstoffen zusammenarbeiten, dass ein Reversier-Motor (9) zum Antrieb der Welle (8) und Steuerorgane (12, 13, 14) zur Regelung der Drehbewegung der beweglichen Zuschneider (10) vorgesehen sind, derart, dass sich die Zuschneider (10) in einer, die Abfallstoffe in das Mundstück (1) fördernden, ersten Richtung oder entgegengesetzt dazu zum Austragen der Abfallstoffe drehen oder während des Saugens stillstehen.

2. Mundstück nach Anspruch 1, dadurch gekennzeichnet, dass die Gehäuse-Ansaugöffnung von einem Teil (5) umfasst ist, das auf einer Angel (6) schwenkbar ist und in dem die drehbare Welle (8) gelagert ist, wobei das Teil (5) mittels der Steuerung (7) zwischen drei Stellungen, nämlich einer ersten Stellung (Fig. 2) mit kleinster und einer zweiten Stellung mit grösster Mundstück-Öffnung und einer Zwischenstellung (Fig. 3) schwenkbar ist.

3. Mundstück nach Anspruch 2, dadurch gekennzeichnet, dass sich die drehbaren Zuschneider (10) in der ersten Richtung drehen, wenn sich das schwenkbare Teil (5) in der ersten Stellung befindet und entgegengesetzt drehen, wenn sich das schwenkbare Teil (5) in der, zweiten Stellung befindet und dass sie in der zwischenstellung (Fig. 3) des schwenkbaren Teil stillstehen.

4. Mundstück nach jedem vorhergehenden Anspruch, dadurch gekennzeichnet, dass der Reversier-Motor (9) ein Luft-Motor ist.

5. Mundstück nach jedem Anspruch 2 bis 4, dadurch gekennzeichnet, dass der Reversier-Motor (9) auf dem schwenkbaren Teil (5) des Gehäuses (1) angeordnet und mittels einer Kraft-Übertragung mit der drehbaren Welle (8) gekuppelt ist.

6. Mundstück nach jedem vorhergehenden Anspruch, dadurch gekennzeichnet, dass die beweglichen Zuschneider (10) aus Fräsern bestehen.

7. Mundstück nach jedem vorhergehenden Anspruch, dadurch gekennzeichnet, dass es zwecks Fährung über eine Bodenfläche mit Laufrädern ausgerüstet ist.

8. Mundstück nach Anspruch 7, dadurch gekennzeichnet, dass zwei Laufräder beiderseits der Öffnung des Mundstücks (1) und dahinter eine Nachlaufrolle vorgesehen sind.

*Fig.1*

*Fig.3*

Fig.2

Fig.4